# FASCICULE DE BREVET EUROPEEN

(11) **EP 3 601 056 B1**
(45) Date de publication et mention de la délivrance du brevet: **08.09.2021**
(21) Numéro de dépôt: 18722652.7
(22) Date de dépôt: 27.03.2018
(51) Int. Cl.: B64D 31/12, F02K 9/00, B64G 1/40

(54) **PROCÉDÉ DE PILOTAGE D'UNE BAIE MULTIMOTEURS, SYSTÈME DE COMMANDE POUR BAIE MULTIMOTEURS ET BAIE MULTIMOTEURS**
VERFAHREN ZUR STEUERUNG EINES MEHRFACHMOTORRAUMS, STEUERUNGSSYSTEM FÜR EINEN MEHRFACHMOTORRAUM UND MEHRFACHMOTORRAUM
METHOD FOR CONTROLLING A MULTI-ENGINE BAY, CONTROL SYSTEM FOR A MULTI-ENGINE BAY AND MULTI-ENGINE BAY

(30) Priorité: 28.03.2017 FR 1752577
(43) Date de publication de la demande: 05.02.2020
(73) Titulaire: ArianeGroup SAS, 75015 Paris (FR)
(72) Inventeur: LE GONIDEC, Serge, 27200 Vernon (FR); KLEIN, Manuel, Sylvain, François, 27200 Vernon (FR)
(74) Mandataire: Cabinet Beau de Loménie
(86) Numéro de dépôt international: PCT/FR2018/050749
(87) Numéro de publication internationale: WO 2018/178566

(56) Documents cités:
- EP-A1- 2 851 759
- FR-A1- 2 946 018
- US-A- 3 811 273
- US-A- 5 143 328

## Description

### DOMAINE DE L'INVENTION

L'invention concerne la commande des moteurs et le suivi de leur état, dans une baie multimoteurs. Une baie multimoteurs est définie ici comme un ensemble propulsif comprenant une pluralité de moteurs disposés de manière à pouvoir générer des forces qui s'ajoutent. L'invention vise plus particulièrement le cas où les moteurs sont des moteurs à réaction, et où la baie est constituée ainsi de plusieurs moteurs-fusées. On trouve des exemples de l'art antérieur dans les documents FR2946018, US3811273, US5143328 et EP2851759.

### ARRIÈRE-PLAN DE L'INVENTION

Dans une baie multimoteurs, l'état de chacun des moteurs se dégrade progressivement en fonction de la durée d'utilisation du moteur et des sollicitations subies par celui-ci en fonctionnement. Du fait de cette dégradation, le risque de défaillance d'un moteur et par conséquent de la baie s'accroît au fur et à mesure de ses phases de fonctionnement.

Un premier objectif de l'invention est donc de proposer un procédé de pilotage de baie multi-moteurs permettant de contenir le risque de défaillance de la baie à un niveau acceptable.

Cet objectif est atteint grâce à un procédé de pilotage d'une baie multimoteurs dans lequel on effectue les étapes suivantes :
a) on commande la baie de telle sorte qu'elle assure une poussée souhaitée et que chaque moteur soit exploité suivant un ensemble de limites fonctionnelles pour le moteur ;
b) on évalue périodiquement un endommagement de chacun des moteurs ;
c) pour chaque moteur, on évalue périodiquement si son endommagement dépasse une valeur prédéterminée ; et,
d) si l'endommagement d'un moteur dit moteur endommagé dépasse une valeur prédéterminée, on modifie au moins une contrainte de fonctionnement, aussi dénommée limitation fonctionnelle, du moteur endommagé de telle sorte que la vitesse d'endommagement du moteur endommagé soit inférieure à une vitesse maximale d'endommagement de moteur prédéterminée.

L'endommagement d'un moteur est ici une information représentative d'une probabilité de défaillance du moteur.

Les étapes a) à d) sont normalement réalisées à l'aide d'un ou plusieurs calculateurs.

Si lors de l'étape c), plusieurs moteurs sont détectés comme étant endommagés, à l'étape d) on modifie au moins une limitation fonctionnelle pour chacun de ceux-ci. Une valeur limite à partir de laquelle on considère que le moteur est endommagé, ou encore une vitesse maximale d'endommagement de moteur, peut être définie spécifiquement pour chaque moteur plutôt que d'utiliser une même valeur pour l'ensemble des moteurs.

Une contrainte de fonctionnement ou limite fonctionnelle est une expression définissant un sous-ensemble de l'espace des variables utilisées pour la commande du moteur, à l'intérieur duquel on impose que se trouve la commande appliquée au moteur considéré. En d'autres termes, imposer des limites fonctionnelles pour la commande d'un moteur contraint donc à commander celui-ci de telle sorte que les valeurs des commandes qui lui sont transmises (ou qui sont transmises à son unité de commande, dans le cas d'un moteur possédant sa propre unité de commande) demeurent dans le sous-ensemble ainsi défini.

Une limite fonctionnelle s'exprime le plus souvent sous la forme d'une relation ou d'une expression, notamment une inégalité, éventuellement vectorielle, qui définit un sous-ensemble de l'espace des variables utilisées pour la commande du moteur. Ces variables peuvent être des variables d'état du moteur, notamment des variables commandées du moteur, comme par exemple des positions d'actionneur. Une limite fonctionnelle peut éventuellement être une fonction du temps.

Les variables susceptibles d'intervenir dans l'expression d'une limite fonctionnelle sont par exemple des vitesses de rotation de turbopompes, des pressions de sortie de pompes, des températures de gaz de combustion ou en sortie d'échangeurs thermiques, etc.

Dans le procédé selon l'invention défini ci-dessus, on évalue périodiquement l'endommagement de chaque moteur. Dès que l'endommagement d'un moteur dépasse une valeur prédéterminée, une action corrective est déclenchée pour réduire la vitesse d'endommagement du moteur : on modifie une ou plusieurs limites fonctionnelles de telle sorte que le moteur soit exploité de telle sorte que son endommagement n'évolue que relativement lentement, c'est-à-dire, de telle sorte que le moteur se dégrade moins rapidement que si cette action palliative n'avait pas été réalisée.

Par suite, le procédé selon l'invention permet que la baie peut continuer à être exploitée sans qu'aucun moteur ne se dégrade rapidement ; par conséquent avantageusement, la fiabilité de la baie ne diminue que très lentement, et la perte de fiabilité est contenue au maximum.

La modification de la ou des limites fonctionnelles peut par exemple inclure une réduction d'une valeur de poussée maximale du moteur, une réduction du rapport de mélange maximal supporté par le moteur, etc.

La modification des limites fonctionnelles à l'étape d) peut être de toute nature : ajout et/ou suppression d'une ou plusieurs limites fonctionnelles, et/ou modification d'une ou plusieurs limites fonctionnelles, etc.

La modification d'une ou plusieurs limites fonctionnelles des moteurs et par conséquent de la baie est prise en compte dans la commande appliquée aux moteurs et par conséquent à la baie (étape de commande a).

Lors de la mise en oeuvre du procédé selon l'invention, la valeur d'endommagement prédéterminée à partir de laquelle on modifie l'ensemble de limitations fonctionnelles du moteur peut notamment être déterminée en fonction de la courbe d'endommagement (ou de la courbe indiquant la probabilité de défaillance) du moteur en fonction du temps.

Naturellement, l'endommagement de l'état du moteur en fonction du temps peut varier de différentes manières, selon les sollicitations que subit le moteur. Cependant, un moteur est souvent opéré avec des valeurs de commande moyennes ou nominales ; ou encore, il peut être opéré suivant un plan de vol prédéterminé. Aussi, pour déterminer la valeur d'endommagement à partir de laquelle on modifie les limites fonctionnelles pour le moteur, on s'appuie généralement sur la courbe des variations d'endommagement en fonction du temps dans le cas du fonctionnement nominal du moteur ou dans le cas du fonctionnement prévu par le plan de vol.

La valeur d'endommagement prédéterminée à partir de laquelle, à l'étape d), on modifie une ou plusieurs des limites fonctionnelles du moteur, peut alors être fixée à la valeur pour laquelle la vitesse d'endommagement du moteur dépasse un seuil prédéterminé, à partir duquel le moteur se dégrade rapidement. Cette valeur-seuil est choisie sur la base de la courbe des variations de l'endommagement en fonction du temps.

La valeur prédéterminée à partir de laquelle on modifie les limites fonctionnelles pour le moteur peut également être fixée en fonction de cette valeur d'endommagement, par exemple un certain temps (prédéterminé) avant que cette valeur d'endommagement ne soit atteinte.

La modification d'une ou plusieurs limites fonctionnelles qui est alors réalisée (étape d)) est choisie de manière à maintenir la vitesse maximale d'endommagement de moteur en dessous d'une valeur prédéterminée.

Par conséquent, si les limites fonctionnelles telles que modifiées à l'étape c) sont prises en compte, le moteur ultérieurement est conduit à se dégrader moins vite que s'il était commandé sur la base des limites fonctionnelles non modifiées prises en compte avant l'étape d).

Comme indiqué précédemment, l'endommagement d'un moteur est une information représentative d'une probabilité de défaillance du moteur.

Ce n'est pas une information relative simplement à une panne du moteur, ou même simplement à un léger dysfonctionnement du moteur (par exemple, une baisse de puissance).

C'est une information (généralement continue, et non binaire) qui donne une estimation de la probabilité de défaillance du moteur, le plus souvent en fonction de l'historique de fonctionnement de ce moteur.

L'endommagement peut être calculé à partir de l'endommagement des principaux composants du moteur. Ainsi, l'endommagement d'un moteur peut par exemple être calculé en fonction du maximum des endommagements respectifs de sous-systèmes du moteur. Si les moteurs sont des moteurs à réaction, l'endommagement peut être calculé en fonction notamment des endommagements respectifs de la chambre de combustion principale et des turbopompes d'alimentation de celle-ci en ergols.

L'endommagement peut par exemple être déterminé de manière empirique et/ou sur la base d'apprentissage des relations de causalité entre une ou plusieurs mesures et la dégradation d'un sous-système d'un moteur ou du moteur lui-même. Cette dégradation est cumulative vol après vol ; la mémoire des vols précédents peut être conservée au moyen de relevés réalisés lors des opérations de maintenance effectuées sur le moteur.

L'endommagement du moteur peut notamment être déterminé par intégration à partir de la vitesse d'endommagement du moteur ou de ses sous-systèmes.

A titre d'exemple, pour un sous-système d'un moteur, la vitesse d'endommagement peut être :
- 1) pour une turbomachine, une valeur fonction de l'énergie vibratoire de la turbomachine et/ou tout autre paramètre approprié, par exemple cumulés ou pondérés pour diverses gammes de fréquence ;
- 2) pour un actionneur, la valeur de la puissance électrique consommée ou une fonction intégrant cette valeur ;
- 3) pour une chambre, la valeur 'en excès', c'est-à-dire dépassant une limite haute prédéterminée, du rapport de mélange entre les ergols dans la chambre, ou encore une fonction intégrant cette valeur 'en excès'.

De plus, dans le cas d'une turbomachine, il est bien connu que la puissance délivrée par la pompe de la turbomachine est étroitement liée à la vitesse de rotation de la turbomachine. Augmenter la puissance délivrée par la pompe, ou la vitesse de rotation de la turbomachine, conduit à augmenter l'énergie vibratoire de la turbomachine et donc à augmenter sa vitesse d'endommagement.

Par conséquent, conformément à l'invention, réduire la vitesse limite de rotation d'une turbomachine d'un moteur (dans le cas où celui-ci est considéré comme endommagé) d'une baie multi-moteurs conduit à réguler la baie sous contrainte de cette vitesse limite pour la turbomachine concernée ; cela conduit à réguler la baie d'une manière qui contraint le plus souvent à réduire la puissance de la pompe, et donc son niveau de vibrations, et ainsi à réduire la vitesse d'endommagement du moteur concerné.

De la même manière, dans le cas de certaines vannes (comme exemple d'actionneurs), le courant de maintien en position de la vanne est représentatif du couple hydraulique appliqué à la vanne ; la vitesse d'endommagement de la vanne est étroitement liée à la valeur du couple qui lui est appliqué.

Par conséquent, conformément à l'invention, modifier les limites fonctionnelles d'un moteur d'une baie multimoteurs dont une vanne est endommagée, en réduisant la valeur maximale du courant de maintien en position de la vanne, conduit à réguler la baie d'une manière qui contraint le plus souvent à réduire le courant de maintien en position de la vanne, et donc le couple qui lui est appliqué : cela conduit ainsi à réduire la vitesse d'endommagement du moteur dont la vanne fait partie.

Enfin, dans le cas d'une chambre, il est possible de réduire la valeur maximale du rapport de mélange acceptable dans la chambre dans le but de réduire la vitesse d'endommagement de la chambre, et par suite du moteur dont celle-ci fait partie.

Dans un mode de mise en œuvre, pour chaque moteur, à l'étape b), on évalue l'endommagement du moteur en fonction au moins d'un endommagement du moteur à un instant antérieur. L'endommagement peut par exemple être calculé à partir de l'endommagement à un instant t-1, auquel on ajoute une estimation de l'endommagement additionnel subi entre l'instant précédent pris en compte t-1 et l'instant t considéré : l'endommagement est calculé par intégration des endommagements supplémentaires s'ajoutant à chaque pas de temps. Les valeurs d'endommagement supplémentaire, qui représentent l'usure du moteur entre les instants t-1 et t peuvent être fonction de la poussée, et/ou des vibrations, des pressions, des températures, etc.

Un deuxième objectif de la présente invention est de proposer un système de commande pour baie multimoteurs permettant d'assurer la commande d'une baie multimoteurs tout en contenant le risque de défaillance de la baie à un niveau acceptable

Cet objectif est atteint également grâce à un système de commande pour baie multimoteurs comprenant :
a) une unité de commande apte à commander la baie de telle sorte qu'elle assure une poussée souhaitée et que chaque moteur soit exploité suivant un ensemble de limites fonctionnelles pour le moteur ;
b) une unité d'évaluation de santé moteur, configurée pour évaluer périodiquement un endommagement de chacun des moteurs ;
c) une unité de mise à jour de limites fonctionnelles, configurée pour, pour chaque moteur, évaluer périodiquement si l'endommagement du moteur dépasse une valeur prédéterminée et pour, si l'endommagement d'un moteur dit moteur endommagé dépasse une valeur prédéterminée, modifier au moins une limitation fonctionnelle du moteur endommagé de telle sorte que la vitesse d'endommagement du moteur endommagé soit inférieure à une vitesse maximale d'endommagement de moteur prédéterminée.

Dans un mode de réalisation, l'unité de mise à jour de limites fonctionnelles est configurée pour modifier ladite au moins une limitation fonctionnelle du moteur endommagé en réduisant une poussée maximale du moteur endommagé.

Le système peut être réalisé notamment suivant l'un ou l'autre des deux modes de réalisation suivants :
Dans un premier mode de réalisation, dit 'bottom-up', le système de commande comprend pour chaque moteur un calculateur de moteur ; l'unité de mise à jour de limites fonctionnelles comporte, dans chaque calculateur de moteur, un module de mise à jour de limites fonctionnelles configuré pour :
   - évaluer périodiquement si l'endommagement du moteur dépasse une valeur prédéterminée ;
   - si l'endommagement du moteur dépasse une valeur prédéterminée, modifier au moins une limitation fonctionnelle du moteur endommagé de telle sorte que la vitesse d'endommagement du moteur endommagé soit inférieure à une vitesse maximale d'endommagement de moteur prédéterminée ; et
   - informer l'unité de commande de la modification apportée à ladite au moins une limitation fonctionnelle du moteur endommagé ;
   et l'unité de commande est configurée pour commander la baie en prenant en compte ladite modification apportée à ladite au moins une limitation fonctionnelle pour le ou les moteurs endommagés.
Dans ce mode de réalisation, la fonction de l'unité de mise à jour de limites fonctionnelles est réalisée au sein des calculateurs de moteur.
Dans un deuxième mode de réalisation, dit 'top-down', le système de commande comprend un calculateur central et pour chaque moteur un calculateur de moteur. De plus :
   l'unité d'évaluation de santé moteur comporte, dans chaque calculateur de moteur, un module d'évaluation de santé moteur configuré pour évaluer périodiquement un endommagement de chacun des moteurs ;
   l'unité de mise à jour de limites fonctionnelles comporte, dans le calculateur central, un module de mise à jour de limites fonctionnelles configuré pour :
      - évaluer pour chacun des moteurs si l'endommagement du moteur dépasse une valeur prédéterminée, sur la base des endommagements respectifs des différents moteurs communiqués par les modules d'évaluation de santé moteur de ceux-ci,
      - pour chaque moteur dit moteur endommagé dont l'endommagement dépasse une valeur prédéterminée, modifier au moins une limitation fonctionnelle du moteur endommagé de telle sorte que la vitesse d'endommagement du moteur endommagé soit inférieure à une vitesse maximale d'endommagement de moteur prédéterminée ; et
      - informer l'unité de commande de la modification apportée à ladite au moins une limitation fonctionnelle du ou des moteurs endommagés ; et
   l'unité de commande est configurée pour commander la baie en prenant en compte ladite modification apportée à ladite au moins une limitation fonctionnelle pour le ou les moteurs endommagés.
Dans ce mode de réalisation, contrairement au précédent, la fonction de l'unité de mise à jour de limites fonctionnelles est réalisée au sein du calculateur central.

La présente invention concerne de plus une baie multimoteurs comprenant un système de commande tel que défini précédemment.

### BREVE DESCRIPTION DES DESSINS

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique latérale d'une baie multimoteurs dans un premier mode de réalisation de l'invention, dit 'top-down' ;
- la figure 2 est une vue schématique latérale d'une baie multimoteurs dans un deuxième mode de réalisation de l'invention, dit 'bottom-up' ;
- la figure 3 est un diagramme représentant, pour un moteur de la baie représentée sur la figure 1, les évolutions de l'endommagement du moteur pour différentes valeurs de poussée ;
- la figure 4 est un diagramme représentant, pour un moteur de la baie représentée sur la figure 1, les évolutions de l'endommagement et de la dérivée de l'endommagement en fonction du temps pour ce moteur, selon que l'invention est mise en œuvre ou non pour la commande du moteur ; et
- la figure 5 est un logigramme présentant les étapes du procédé selon l'invention dans un mode de mise en œuvre.

### DESCRIPTION DETAILLEE DE L'INVENTION

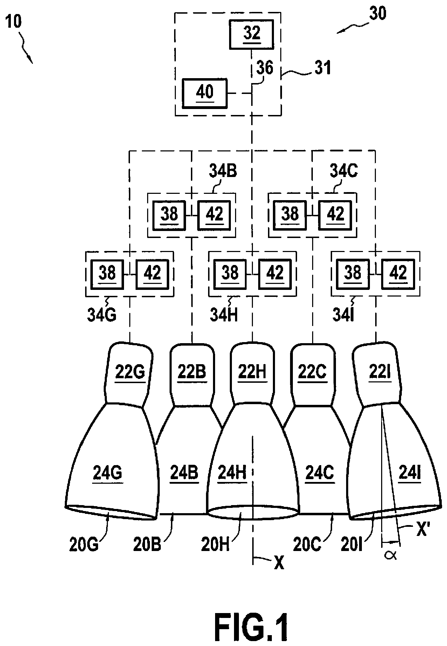

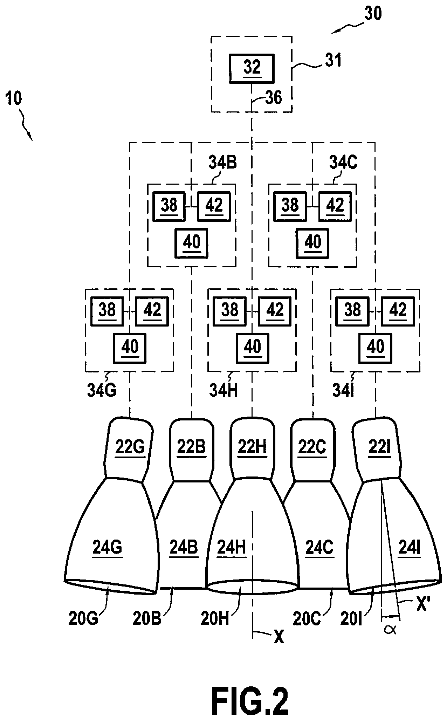

Une baie multimoteurs 10 va maintenant être présentée dans deux modes de réalisation légèrement différents, en relation respectivement avec la figure 1 et la figure 2.

Dans les deux modes de réalisation, la baie multimoteurs 10 ou baie 10 comprend dix moteurs référencés respectivement 20A, 20B,... 20J et référencés collectivement moteurs 20 (seuls cinq moteurs sont représentés sur la figure 1).

Elle comprend également deux réservoirs d'ergols, des circuits de distribution et de mise en pression de ces ergols, et différents équipements additionnels, non représentés.

Chacun de ces moteurs est un moteur-fusée comprenant une chambre de combustion (chambres 22A,22B,...22J) aménagée en amont d'une tuyère (tuyères 24A,24B,...24J). Les références 22, 24 désignent collectivement les chambres de combustion et respectivement les tuyères.

La commande de la baie 10 est assurée par un système de commande 30.

Le système de commande 30 comporte un calculateur central 31 et dix calculateurs de moteur 34A,34B,...34J.

Les calculateurs de moteur 34A,34B,...34J et le calculateur central 31, qui échangent des informations relatives au fonctionnement et à la commande des moteurs sont reliés par un bus de transmission de données 36.

Le système de commande 30 comprend trois unités fonctionnelles : une unité de commande 32 pour la commande globale de la baie, une unité d'évaluation de santé moteur 38, et une unité de mise à jour de limites fonctionnelles 40. Il comprend aussi, pour la commande opérationnelle de chaque moteur, une unité de commande de moteur 42. Les unités de commande 32, d'évaluation de santé moteur 38, de mise à jour de limites fonctionnelles 40 sont des modules fonctionnels implémentés au sein du système de commande 30.

L'unité de commande 32 est l'unité qui assure le calcul des commandes à transmettre aux différents moteurs 20. Ces commandes peuvent être par exemple notamment la valeur de la poussée qu'il est demandé aux moteurs de fournir à l'instant considéré.

Dans chaque moteur, sur la base de la commande reçue de l'unité de commande 32, le calculateur de moteur 34 calcule les commandes à transmettre à chacun des actionneurs du moteur (commandes de degré d'ouverture de vannes réglables, etc.), en prenant en compte les limitations fonctionnelles des différents actionneurs, et transmet ces commandes à ces actionneurs.

L'ensemble des calculs réalisés par les unités du système de commande 30 sont réalisés en temps réel de manière périodique, de manière à assurer la continuité de la commande du moteur.

L'unité de commande 32 calcule la commande de la baie de telle sorte que la baie assure une poussée totale F souhaitée pour le lanceur, et que chaque moteur soit exploité suivant un ensemble de limites fonctionnelles dudit moteur.

En parallèle, quand la baie est en fonctionnement, l'unité d'évaluation de santé moteur 38 évalue en permanence (c'est-à-dire périodiquement) l'état de santé, c'est-à-dire l'état de dégradation, de chacun des moteurs et plus largement de la baie. En particulier, l'unité d'évaluation de santé moteur 38 évalue périodiquement, à chaque pas de temps, l'endommagement ENDO de chacun des moteurs ; les valeurs d'endommagement ENDO sont transmises à l'unité de mise à jour de limites fonctionnelles 40.

L'unité de mise à jour de limites fonctionnelles 40 (appelée par la suite pour simplifier, 'unité 40') est configurée pour comparer l'endommagement de chacun des moteurs à des valeurs prédéterminées pour chacun des moteurs.

Si pour un moteur, l'endommagement de celui-ci dépasse une valeur prédéterminée choisie comme étant l'endommagement maximal admissible, l'unité 40 modifie au moins une des limitations fonctionnelles du moteur de telle sorte que la vitesse d'endommagement du moteur endommagé soit inférieure à une vitesse maximale d'endommagement de moteur prédéterminée dENDO/dt_max.

Les valeurs modifiées des limitations fonctionnelles sont transmises à l'unité de commande 32, qui prend en compte les limitations fonctionnelles modifiées pour la détermination des commandes à appliquer aux moteurs.

Chacune des unités fonctionnelles du système de commande 30 effectue les étapes de calcul qui lui sont affectées en temps réel, de manière cyclique et itérative, avec un pas de temps généralement constant entre deux cycles de calcul.

A chaque cycle, l'unité de commande 32 calcule les commandes (par exemple les consignes de poussée) à transmettre aux unités de commandes 34 des moteurs 20 ; l'unité d'évaluation de santé moteur 38 calcule les endommagements respectifs des différents moteurs 20 ; l'unité 40 compare l'endommagement ENDO de chacun des moteurs 20 à la valeur maximale d'endommagement admissible ENDO_S, et lorsque cette valeur est dépassée, modifie une ou plusieurs des limites fonctionnelles du ou des moteurs concernés.

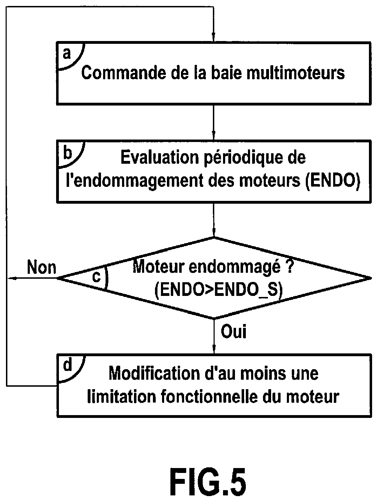

Le procédé mis en œuvre, résumé par la figure 5, comporte donc les étapes suivantes :
a) on commande la baie de telle sorte qu'elle assure une poussée souhaitée et que chaque moteur soit exploité suivant l'ensemble de limites fonctionnelles prévu pour le moteur ;
b) on évalue périodiquement l'endommagement ENDO de chacun des moteurs ;
c) pour chaque moteur, on évalue périodiquement si son endommagement ENDO dépasse une valeur prédéterminée ENDO_S ; et,
d) si l'endommagement d'un moteur dépasse la valeur prédéterminée ENDO_S, celui-ci est considéré alors comme endommagé ; on modifie alors au moins une limitation fonctionnelle de ce moteur endommagé de telle sorte que sa vitesse d'endommagement dENDO/dt soit inférieure à une vitesse maximale d'endommagement de moteur prédéterminée dENDO/dt_max.

Chacune des étapes a), b), c) et d), dont les opérations sont réalisées respectivement par les unités 32, 38, 40 et 40 (l'unité 40 réalise les étapes c) et d), doit être réalisée périodiquement, mais ces étapes peuvent être réalisées dans un ordre quelconque.

Les particularités de deux modes de réalisation de l'invention présentés à titre d'exemple vont maintenant être présentées.

### Architecture 'Top-down'

Dans le premier mode de réalisation (Fig.1), le système de commande électronique 30 présente un fonctionnement dit Top-down' dans la mesure où les modifications des limitations fonctionnelles à l'étape d) sont faites de manière centralisée.

Dans ce mode de réalisation, l'unité d'évaluation de santé moteur 38 est constituée par des modules logiciels implantés au sein des calculateurs de moteurs 34. Lorsque la baie 10 est en fonctionnement, dans chaque moteur, le module d'évaluation de santé du moteur évalue périodiquement l'endommagement ENDO du moteur. Il envoie alors au calculateur 31 un indicateur (ou 'drapeau') indiquant son endommagement.

L'unité de mise à jour de limites fonctionnelles 40 est constituée principalement par un module logiciel 40 implanté au sein du calculateur central 31.

L'unité 40, sur la base des indicateurs ENDO reçus des modules de santé moteur, pour chaque moteur, évalue périodiquement si l'endommagement ENDO du moteur dépasse une valeur prédéterminée ENDO_S.

Si l'unité 40 détecte par cette comparaison qu'un moteur est endommagé, elle modifie une ou plusieurs des limitations fonctionnelles du moteur, pour garantir la fiabilité de celui-ci. Dans le présent exemple, la modification des limites fonctionnelles par l'unité 40 consiste à diminuer le point de fonctionnement du moteur, c'est-à-dire la poussée nominale maximale de celui-ci. Conformément à l'invention, cette modification est faite de telle sorte que la vitesse d'endommagement du moteur endommagé soit maintenue en dessous d'une vitesse maximale d'endommagement de moteur prédéterminée (dENDO/dt_max).

L'unité 40 transmet alors les valeurs de poussée nominale maximale à l'unité de commande 32.

L'unité de commande 32 est constituée principalement par un module logiciel 32 implanté au sein du calculateur central 31. En fonction des limitations fonctionnelles modifiées reçues de l'unité de mise à jour de limites fonctionnelles 40, l'unité de commande 32 calcule les valeurs de poussée respectives que doivent fournir les différents moteurs pour maintenir la poussée globale à la valeur souhaitée. Elle envoie aux calculateurs de moteur 34 les valeurs de poussée respectives ainsi déterminées.

Au sein des calculateurs de moteur 34, en fonction des valeurs de poussée reçues, les unités de commande de moteur 42 assurent la commande respective des différents moteurs 20.

### Architecture 'Bottom-up'

L'architecture du système de commande 30 dans le deuxième mode de réalisation va maintenant être décrite (Fig.2). Ce mode de réalisation est identique au premier mode de réalisation, à l'exception des différences indiquées ci-après.

Dans ce mode de réalisation, l'unité d'évaluation de santé moteur 38 est comme précédemment constituée par des modules logiciels 38 implantés au sein des calculateurs de moteurs 34. Lorsque la baie 10 est en fonctionnement, dans chaque moteur, le module 38 d'évaluation de santé du moteur évalue périodiquement l'endommagement ENDO du moteur.

L'unité de mise à jour de limites fonctionnelles 40 est constituée principalement par des modules logiciels (notés également 40) implantés, contrairement au mode de réalisation précédent, au sein des calculateurs de moteur 34.

Aussi dans ce mode de réalisation, dans chaque moteur, l'indicateur d'endommagement ENDO est envoyé par le module d'évaluation de santé moteur 38 au module de mise à jour de limites fonctionnelles 40 au sein du calculateur moteur 34.

Le module de mise à jour de limites fonctionnelles 40, si l'endommagement du moteur ENDO dépasse la valeur prédéterminée ENDO_S, modifie au moins une des limitations fonctionnelles du moteur de telle sorte que la vitesse d'endommagement du moteur endommagé dENDO/dt soit inférieure à la vitesse maximale d'endommagement de moteur prédéterminée dENDO/dt_max.

Le module 40 transmet alors à l'unité de commande 32 :
- un premier indicateur 'Drapeau 1' indiquant que la valeur de poussée maximale du moteur a été restreinte, et
- un deuxième indicateur 'Drapeau 2' indiquant la nouvelle valeur de poussée maximale du moteur.

Eventuellement, le deuxième indicateur peut être exprimé sous la forme d'un niveau d'efficacité, c'est-à-dire que la valeur transmise par le deuxième indicateur est seulement le ratio entre la valeur de poussée maximale à prendre en compte, telle que déterminée par le module 40, et la valeur de poussée maximale initiale définissant la poussée maximale nominale du moteur lorsqu'il est en parfait état de fonctionnement. Le niveau d'efficacité exprime donc le ratio entre la limitation fonctionnelle modifiée du moteur (la poussée maximale réelle du moteur) et la limitation fonctionnelle nominale (ou initiale) du moteur (la poussée maximale nominale du moteur).

L'unité de commande 32 est configurée, comme précédemment, pour déterminer la commande de la baie en prenant en compte les modifications apportées aux limitations fonctionnelles des différents moteurs.

Le fonctionnement du système de commande 30 va être mieux compris à l'occasion d'un exemple concret de mise en oeuvre du procédé de pilotage de la baie 10 selon l'invention.

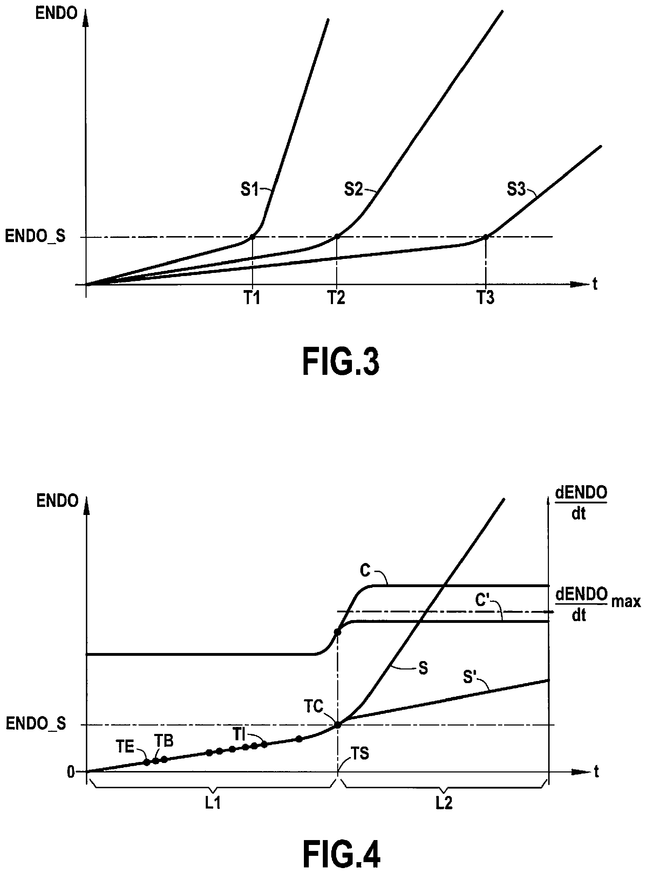

Préalablement, le processus de dégradation de l'état de santé des moteurs 20 va d'abord être décrit en relation avec la figure 3.

La figure 3 est un diagramme représentant sous forme de courbes S (S1,S2,S3) les évolutions de l'endommagement ENDO d'un moteur 20 en fonction du temps. Sur ce diagramme, l'endommagement ENDO est indiqué en ordonnée et le temps apparaît en abscisse. La dérivée de l'endommagement dENDO/dt en fonction du temps est appelée « vitesse d'endommagement ».

Lorsque l'on utilise la baie multimoteurs 10, l'endommagement ENDO de chaque moteur augmente au fil du temps en suivant une courbe S.

Pour chaque moteur 20, l'endommagement ENDO augmente en fonction des sollicitations qui lui sont appliquées, c'est-à-dire de la poussée qu'il lui est demandé de fournir. La vitesse d'endommagement dENDO/dt des moteurs les plus sollicités (c'est-à-dire, qui fournissent la poussée la plus importante) est ainsi supérieure à celle des moteurs les moins sollicités. Les courbes S représentent les variations de l'endommagement ENDO pour différentes valeurs de la poussée demandée au moteur. La courbe S1 correspond à la poussée la plus forte, et la courbe S3 à la poussée la plus faible.

Chacune de ces courbes présente une première période qui se poursuit jusqu'à ce que l'endommagement ENDO atteigne une valeur ENDO_S et durant laquelle l'endommagement ENDO croît relativement lentement.

Aussi pour les moteurs 20, tant que l'endommagement est inférieur à cette valeur d'endommagement ENDO_S, la fiabilité est excellente avec une probabilité de défaillance ENDO restant très faible.

Pendant cette période, l'endommagement ENDO augmente globalement de manière proportionnelle à la durée t d'utilisation du moteur, comptée depuis la dernière opération de maintenance du moteur. (Naturellement, l'endommagement ENDO peut être calculé de manière plus précise pour le moteur en prenant en compte plus finement les sollicitations auxquelles celui-ci est soumis.)

Dès que l'endommagement dépasse la valeur ENDO_S, pendant une deuxième période l'endommagement ENDO se met à croître beaucoup plus rapidement ; à partir de cette valeur d'endommagement ENDO_S, le moteur est considéré comme endommagé.

Les courbes S permettent donc de distinguer deux périodes : des premières périodes (ENDO < ENDO_S) durant lesquelles la probabilité de défaillance reste très faible, en croissant très lentement en fonction du temps, et des deuxièmes périodes (ENDO > ENDO_S) durant lesquelles le moteur se dégrade beaucoup plus rapidement (forte croissance de l'endommagement par unité de temps.

On constate que la vitesse d'endommagement (dENDO/dt) des moteurs, pendant la deuxième période, est d'autant plus faible que la poussée demandée au moteur est faible. Ainsi, la pente de la courbe S3 pendant la deuxième période est plus faible que la pente de la courbe S2 et encore plus faible que celle de la courbe S1 pendant la deuxième période.

Dans cet exemple, on considère que la vitesse d'endommagement du moteur, pour la poussée correspondant à la courbe S3, pendant la deuxième partie de la courbe S3 (t>T3), est une vitesse d'endommagement acceptable compte tenu de la mission à réaliser par la fusée.

Par conséquent, imposer au moteur que sa poussée soit au plus égale à la poussée correspondant à la courbe S3 permet donc d'imposer au moteur que sa vitesse d'endommagement soit inférieure (ou au plus égale) à une valeur prédéterminée dENDO/dt_max considérée comme acceptable (c'est la vitesse d'endommagement du moteur pendant la deuxième période sur la courbe S3).

Cette propriété est exploitée selon l'invention de la manière suivante : dès que l'on constate qu'un moteur est endommagé, avec un endommagement du moteur dépassant la valeur prédéterminée ENDO_S (c'est-à-dire, dès que le moteur passe dans un fonctionnement en deuxième période), on modifie une ou plusieurs de ses limites fonctionnelles (dans le présent exemple : on réduit la poussée maximale susceptible d'être demandée au moteur), de telle sorte qu'il soit exploité à un point de fonctionnement (pour une poussée demandée) pour lequel sa vitesse d'endommagement est inférieure à une vitesse d'endommagement que l'on considère comme vitesse d'endommagement maximale admissible dENDO/dt_max.

Ainsi dans l'exemple considéré, dès que l'on constate que l'endommagement du moteur atteint la valeur ENDO_S, on réduit la poussée maximale qui est susceptible de lui être demandée en fixant la poussée maximale du moteur à la poussée correspondant à la courbe S3. Dès cet instant, la poussée qui est calculée pour le moteur est nécessairement inférieure à cette poussée maximale : par suite, la poussée demandée au moteur est inférieure à la poussée correspondant à la la courbe S3 et présentant une vitesse d'endommagement relativement faible à partir de cet instant. Par conséquent, dès cet instant la vitesse d'endommagement du moteur reste inférieure à dENDO/dt_Max.

Cette action n'est pas conduite en imposant directement une réduction de la poussée demandée au moteur, mais en imposant un changement dans la limitation fonctionnelle du moteur (à savoir, la valeur limite de poussée maximale du moteur. Naturellement, une autre limitation fonctionnelle aurait pu être choisie comme par exemple la vitesse maximale de rotation d'une pompe, etc...).

La modification d'une limitation fonctionnelle ou contrainte de fonctionnement est déterminée par le module 40 et est ensuite prise en compte par l'unité de commande de la baie (module 32), ce qui conduit effectivement, la plupart du temps, à une réduction de la poussée du moteur.

Le fonctionnement obtenu pour la baie est illustré par la figure 4.

Le scénario que l'on envisage ici est celui d'un lanceur réutilisable, dans lequel la baie multimoteurs 10 comporte des moteurs 20 dont la maintenance a été faite de manière plus ou moins récente selon le moteur considéré. Ainsi à l'instant du vol considéré, les moteurs présentent des probabilités de défaillance respectives TA,TB,...TJ.

L'objectif est de maintenir l'endommagement (la probabilité de défaillance) de chacun des moteurs, pendant toute la durée de la mission, au niveau le plus faible possible. Les probabilités de défaillance des différents moteurs sont représentées sur la figure 4 sous forme de points sur la courbe S.

La figure 4 représente sous forme de courbes S, S' et C, C' les évolutions respectivement de l'endommagement ENDO, et de la dérivée de l'endommagement dENDO/dt, en fonction du temps, pour un moteur 20 donné, dans deux scénarios différents.

Dans les deux cas, l'endommagement ENDO du moteur 20 considéré atteint la valeur ENDO_S à un instant TS à l'issue d'une première période L1.

Dans le premier scénario (courbes S et C), on ne met pas en œuvre l'invention, alors que dans le deuxième scénario (courbes S'et C'), on met en œuvre l'invention en modifiant au moins une des limites fonctionnelles du moteur 20 considéré, à savoir en réduisant la poussée maximale susceptible d'être demandée au moteur.

Dans le premier scénario, comme aucune action n'est déclenchée à l'instant TS, le moteur passe dans une deuxième période de fonctionnement L2.

Dans cette deuxième période de fonctionnement L2 (t>TS), dans le premier scénario envisagé le moteur 20 considéré est exploité à sa poussée maximale ; son endommagement augmente rapidement, et sa vitesse d'endommagement est supérieure à dENDO/dt_max (courbe C).

Inversement dans le deuxième scénario, dès que l'on détecte que l'endommagement du moteur 20 considéré atteint la valeur ENDO_S, on modifie les limitations fonctionnelles en réduisant la valeur de poussée maximale susceptible d'être demandée à ce moteur.

Cette modification entraine une diminution de sa vitesse d'endommagement, qui se traduit par le fait que la courbe C' est sous le pointillé correspondant à la valeur dENDO/dt_max sur la figure 4. Par conséquent, cela permet de poursuivre la mission de telle sorte que l'endommagement à l'issue de la mission soit bien plus faible que si les limitations fonctionnelles n'avaient pas été modifiées.

La modification des limitations fonctionnelles du moteur 20 détecté comme endommagé à l'instant TS, à savoir la réduction de la poussée maximale du moteur 20, contraint l'unité de commande 32 de la baie à recalculer les commandes de ce moteur. Ces commandes sont recalculées en prenant en compte la valeur modifiée de poussée maximale pour ce moteur. Les commandes ainsi recalculées pour le moteur 20 peuvent être modifiées, ou pas, par le changement des limitations fonctionnelles de ce moteur.

Du fait de la modification des limitations fonctionnelles pour le moteur 20, la vitesse d'endommagement du moteur dENDO/dt après l'instant TS est nécessairement plus faible que si les limitations fonctionnelles (dans le cas présent, la poussée maximale du moteur), n'avaient pas été modifiées.

Par suite, la modification des limites fonctionnelles du moteur 20 à l'étape c) conduit à réduire la vitesse de dégradation du moteur considéré et peut donc contribuer à augmenter la vitesse de dégradation des autres moteurs de la baie. Cependant, avantageusement comme les autres moteurs ont des endommagements plus faibles, leurs vitesses de dégradation sont plus faibles ; par suite, la stratégie adoptée permet de réduire l'augmentation de l'endommagement global de la baie, c'est-à-dire l'augmentation du risque de perte d'un moteur, en fonction du temps.

Pour modifier une ou plusieurs limites fonctionnelles d'un moteur de telle sorte que sa vitesse d'endommagement soit diminuée, différentes stratégies (c'est-à-dire, différentes modifications des limitations fonctionnelles) peuvent être adoptées. Compte tenu du nombre de limites fonctionnelles sur un moteur à réaction, il n'est pas possible de les énumérer ici.

Une stratégie principale pour diminuer la vitesse d'endommagement du moteur est simplement de réduire la poussée maximale susceptible d'être délivrée par le moteur. Dans ce cas, on modifie l'ensemble de limites fonctionnelles du moteur en réduisant la valeur de la valeur de poussée maximale prise en compte pour la commande du moteur.

Une autre stratégie peut consister à réduire le rapport de mélange maximal du moteur. En effet, la valeur du rapport de mélange détermine notamment la température atteinte par les gaz de combustion dans la chambre ; plus cette température est élevée, plus la dégradation de la chambre est rapide, c'est-à-dire, plus la vitesse d'endommagement du moteur est grande.

Une autre stratégie peut consister à réduire les débits maximum d'alimentation de l'un et/ou l'autre des ergols d'alimentation du moteur. Réduire ces débits conduit en effet à réduire la vitesse de rotation maximale de la ou des turbopompes d'alimentation en ergols, et donc à diminuer leur vitesse d'endommagement et par suite, la vitesse d'endommagement du moteur.

## Revendications

1. Procédé de pilotage d'une baie multimoteurs (10) suivant lequel on effectue les étapes suivantes :
a) on commande la baie de telle sorte qu'elle assure une poussée souhaitée et que chaque moteur soit exploité suivant un ensemble de limites fonctionnelles pour le moteur ;
b) on évalue périodiquement un endommagement (ENDO) de chacun des moteurs, l'endommagement d'un moteur étant une information représentative d'une probabilité de défaillance du moteur ;
c) pour chaque moteur, on évalue périodiquement si son endommagement (ENDO) dépasse une valeur prédéterminée (ENDO_S) ; et,
d) si l'endommagement d'un moteur dit moteur endommagé dépasse une valeur prédéterminée, on modifie au moins une limitation fonctionnelle du moteur endommagé de telle sorte que la vitesse d'endommagement du moteur endommagé (dENDO/dt) soit inférieure à une vitesse maximale d'endommagement de moteur prédéterminée (dENDO/dt_max).

2. Procédé de pilotage selon la revendication 1, dans lequel la modification de la ou de limites fonctionnelles du moteur inclut une réduction d'une valeur de poussée maximale du moteur.

3. Procédé de pilotage selon la revendication 1 ou 2, dans lequel l'endommagement d'un moteur est calculé en fonction d'un maximum des endommagements respectifs de sous-systèmes du moteur.

4. Procédé de pilotage selon l'une quelconque des revendications 1 à 3, dans lequel, pour chaque moteur, à l'étape b), on évalue l'endommagement du moteur en fonction au moins d'un endommagement du moteur à un instant antérieur.

5. Système de commande (30) pour baie multimoteurs,
le système de commande **se caractérisant en ce qu'**il comprend :
a) une unité de commande (32) apte à commander la baie de telle sorte qu'elle assure une poussée souhaitée et que chaque moteur soit exploité suivant un ensemble de limites fonctionnelles pour le moteur ;
b) une unité d'évaluation de santé moteur (38), configurée pour évaluer périodiquement un endommagement (ENDO) de chacun des moteurs, l'endommagement d'un moteur étant une information représentative d'une probabilité de défaillance du moteur ;
c) une unité de mise à jour de limites fonctionnelles (40), configurée pour, pour chaque moteur, évaluer périodiquement si l'endommagement du moteur dépasse une valeur prédéterminée (ENDO_S) et pour, si l'endommagement d'un moteur dit moteur endommagé dépasse une valeur prédéterminée, modifier au moins une limitation fonctionnelle du moteur endommagé de telle sorte que la vitesse d'endommagement du moteur endommagé (dENDO/dt) soit inférieure à une vitesse maximale d'endommagement de moteur prédéterminée (dENDO/dt_max).

6. Système de commande pour baie multimoteurs selon la revendication 5, dont l'unité de mise à jour de limites fonctionnelles (40) est configurée pour modifier ladite au moins une limitation fonctionnelle du moteur endommagé en réduisant une poussée maximale du moteur endommagé.

7. Système de commande pour baie multimoteurs selon la revendication 5 ou 6, comprenant pour chaque moteur un calculateur de moteur (34), et dans lequel :
l'unité de mise à jour de limites fonctionnelles (40) comporte, dans chaque calculateur de moteur (34), un module de mise à jour de limites fonctionnelles (40) configuré pour :
- évaluer périodiquement si l'endommagement du moteur dépasse une valeur prédéterminée (ENDO_S) ;
- si l'endommagement du moteur dépasse une valeur prédéterminée, modifier au moins une limitation fonctionnelle du moteur endommagé de telle sorte que la vitesse d'endommagement du moteur endommagé (dENDO/dt) soit inférieure à une vitesse maximale d'endommagement de moteur prédéterminée (dENDO/dt_max) ; et
- informer l'unité de commande (32) de la modification apportée à ladite au moins une limitation fonctionnelle du moteur endommagé ; et
l'unité de commande (32) est configurée pour commander la baie en prenant en compte ladite modification apportée à ladite au moins une limitation fonctionnelle pour le ou les moteurs endommagés.

8. Système de commande pour baie multimoteurs selon la revendication 5 ou 6, comprenant un calculateur central (31) et pour chaque moteur un calculateur de moteur (34), et dans lequel :
l'unité d'évaluation de santé moteur (38) comporte, dans chaque calculateur de moteur (34), un module d'évaluation de santé moteur configuré pour évaluer périodiquement un endommagement (ENDO) de chacun des moteurs ;
l'unité de mise à jour de limites fonctionnelles (40) comporte, dans le calculateur central (31), un module de mise à jour de limites fonctionnelles (40) configuré pour :
- évaluer pour chacun des moteurs si l'endommagement du moteur dépasse une valeur prédéterminée (ENDO_S), sur la base des endommagements respectifs des différents moteurs communiqués par les modules d'évaluation de santé moteur de ceux-ci,
- pour chaque moteur dit moteur endommagé dont l'endommagement dépasse une valeur prédéterminée, modifier au moins une limitation fonctionnelle du moteur endommagé de telle sorte que la vitesse d'endommagement du moteur endommagé (dENDO/dt) soit inférieure à une vitesse maximale d'endommagement de moteur prédéterminée (dENDO/dt_max) ; et
- informer l'unité de commande (32) de la modification apportée à ladite au moins une limitation fonctionnelle du ou des moteurs endommagés ; et
l'unité de commande (32) est configurée pour commander la baie (10) en prenant en compte ladite modification apportée à ladite au moins une limitation fonctionnelle pour le ou les moteurs endommagés.

9. Baie multimoteurs (10) comprenant un système de commande selon l'une quelconque des revendications 5 à 8.

## Patentansprüche

1. Verfahren zur Steuerung eines Mehrfachmotorraums (10), bei dem die folgenden Schritte ausgeführt werden:
a) Steuern des Raums derart, dass er einen gewünschten Schub gewährleistet und dass jeder Motor gemäß einer Menge von Funktionsgrenzen für den Motor genutzt wird,
b) periodisches Bewerten einer Beschädigung (ENDO) von jedem der Motoren, wobei die Beschädigung eines Motors eine Information ist, die für eine Ausfallwahrscheinlichkeit des Motors repräsentativ ist,
c) für jeden Motor periodisches Bewerten, ob seine Beschädigung (ENDO) einen vorbestimmten Wert (ENDO_S) überschreitet, und
d) wenn die Beschädigung eines beschädigter Motor genannten Motors einen vorbestimmten Wert überschreitet, Ändern mindestens einer Funktionsgrenze des beschädigten Motors derart, dass die Beschädigungsgeschwindigkeit des beschädigten Motors (dENDO/dt) kleiner als eine maximale Beschädigungsgeschwindigkeit des vorbestimmten Motors (dENDO/dt_max) ist.

2. Verfahren zur Steuerung nach Anspruch 1, wobei die Änderung der einen oder mehreren Funktionsgrenzen des Motors eine Verminderung eines maximalen Schubwerts des Motors einschließt.

3. Verfahren zur Steuerung nach Anspruch 1 oder 2, wobei die Beschädigung eines Motors in Abhängigkeit von einem Maximum der jeweiligen Beschädigungen von Untersystemen des Motors berechnet wird.

4. Verfahren zur Steuerung nach einem der Ansprüche 1 bis 3, wobei für jeden Motor beim Schritt b) die Beschädigung des Motors in Abhängigkeit von mindestens einer Beschädigung des Motors zu einem vorherigen Zeitpunkt bewertet wird.

5. Steuerungssystem (30) für einen Mehrfachmotorraum,
wobei das Steuerungssystem **dadurch gekennzeichnet ist, dass** es umfasst:
a) eine Steuerungseinheit (32), die geeignet ist, den Raum derart zu steuern, dass er einen gewünschten Schub gewährleistet und dass jeder Motor gemäß einer Menge von Funktionsgrenzen für den Motor genutzt wird,
b) eine Motorgesundheit-Bewertungseinheit (38), die dazu ausgestaltet ist, periodisch eine Beschädigung (ENDO) von jedem der Motoren zu bewerten, wobei die Beschädigung eines Motors eine Information ist, die für eine Ausfallwahrscheinlichkeit des Motors repräsentativ ist,
c) eine Funktionsgrenzen-Aktualisierungseinheit (40), die dazu ausgestaltet ist, für jeden Motor periodisch zu bewerten, ob die Beschädigung des Motors einen vorbestimmten Wert (ENDO_S) überschreitet und, wenn die Beschädigung eines beschädigter Motor genannten Motors einen vorbestimmten Wert überschreitet, mindestens eine Funktionsgrenze des beschädigten Motors zu ändern derart, dass die Beschädigungsgeschwindigkeit des beschädigten Motors (dENDO/dt) kleiner als eine vorbestimmte maximale Beschädigungsgeschwindigkeit des Motors (dENDO/dt_max) ist.

6. Steuerungssystem für einen Mehrfachmotorraum nach Anspruch 5, dessen Funktionsgrenzen-Aktualisierungseinheit (40) dazu ausgestaltet ist, die mindestens eine Funktionsgrenze des beschädigten Motors durch Verminderung eines maximalen Schubs des beschädigten Motors zu ändern.

7. Steuerungssystem für einen Mehrfachmotorraum nach Anspruch 5 oder 6, das für jeden Motor einen Motorrechner (34) umfasst, und wobei:
die Funktionsgrenzen-Aktualisierungseinheit (40) in jedem Motorrechner (34) ein Funktionsgrenzen-Aktualisierungsmodul (40) beinhaltet, das ausgestaltet ist zum:
- periodischen Bewerten, ob die Beschädigung des Motors einen vorbestimmten Wert (ENDO_S) überschreitet,
- wenn die Beschädigung des Motors einen vorbestimmten Wert überschreitet, Ändern mindestens einer Funktionsgrenze des beschädigten Motors derart, dass die Beschädigungsgeschwindigkeit des beschädigten Motors (dENDO/dt) kleiner als eine maximale Beschädigungsgeschwindigkeit des vorbestimmten Motors (dENDO/dt_max) ist, und
- Informieren der Steuerungseinheit (32) über die an der mindestens einen Funktionsgrenze des beschädigten Motors vorgenommene Änderung, und
die Steuerungseinheit (32) dazu ausgestaltet ist, den Raum unter Berücksichtigung der an der mindestens einen Funktionsgrenze für den oder die beschädigten Motoren vorgenommenen Änderung zu steuern.

8. Steuerungssystem für einen Mehrfachmotorraum nach Anspruch 5 oder 6, das einen Zentralrechner (31) und für jeden Motor einen Motorrechner (34) umfasst, und wobei:
die Motorgesundheit-Bewertungseinheit (38) in jedem Motorrechner (34) ein Motorgesundheit-Bewertungsmodul beinhaltet, das dazu ausgestaltet ist, periodisch eine Beschädigung (ENDO) von jedem der Motoren zu bewerten,
die Funktionsgrenzen-Aktualisierungseinheit (40) in dem Zentralrechner (31) ein Funktionsgrenzen-Aktualisierungsmodul (40) umfasst, das ausgestaltet ist zum:
- Bewerten für jeden der Motoren, ob die Beschädigung des Motors einen vorbestimmten Wert (ENDO_S) überschreitet, basierend auf entsprechenden Beschädigungen der verschiedenen Motoren, die von deren Motorgesundheit-Bewertungsmodulen mitgeteilt werden,
- für jeden beschädigter Motor genannten Motor, dessen Beschädigung einen vorbestimmten Wert überschreitet, Ändern mindestens einer Funktionsgrenze des beschädigten Motors derart, dass die Beschädigungsgeschwindigkeit des beschädigten Motors (dENDO/dt) niedriger als eine vorbestimmte maximale Motorbeschädigungsgeschwindigkeit (dENDO/dt_max) ist, und
- Informieren der Steuerungseinheit (32) über die an der mindestens einen Funktionsgrenze des oder der beschädigten Motoren vorgenommene Änderung, und
die Steuerungseinheit (32) dazu ausgestaltet ist, den Raum (10) unter Berücksichtigung der an der mindestens einen Funktionsgrenze für den oder die beschädigten Motoren vorgenommenen Änderung zu steuern.

9. Mehrfachmotorraum (10), der ein Steuerungssystem nach einem der Ansprüche 5 bis 8 umfasst.

## Claims

1. A method of controlling a multi-engine bay (10) in which the following steps are performed:
a) controlling the bay so that it delivers desired thrust and that each engine is operated in compliance with a set of operating limits for the engine;
b) periodically evaluating a level of damage (ENDO) for each of the engines, the level of damage of an engine being information representative of a probability of the engine failing;
c) for each engine, periodically evaluating whether its level of damage (ENDO) exceeds a predetermined value (ENDO_S); and
d) if the level of damage of an engine, referred to as a "damaged" engine, exceeds a predetermined value, modifying at least one operating limit of the damaged engine so that the rate of damage (dENDO/dt) of the damaged engine is less than a predetermined maximum rate of engine damage (dENDO/dt_max).

2. A control method according to claim 1, wherein the modification to the operating limit(s) of the engine includes reducing a maximum thrust value of the engine.

3. A control method according to claim 1 or claim 2, wherein the level of damage of an engine is calculated as a function of a maximum of respective levels of damage of subsystems of the engine.

4. A control method according to any one of claims 1 to 3, wherein, for each engine, in step b), the level of damage of the engine is evaluated as a function at least of a level of damage of the engine at an earlier instant.

5. A control system (30) for a multi-engine bay, the control system being **characterized in that** it comprises:
a) a control unit (32) suitable for controlling the bay in such a manner that it delivers desired thrust and that each engine is operated in compliance with a set of operating limits for the engine;
b) an engine health evaluation unit (38) configured to evaluate periodically a level of damage (ENDO) for each of the engines, the level of damage of an engine being information representative of a probability of the engine failing; and
c) an operating limit updating unit (40) configured, for each engine, to evaluate periodically whether the level of damage of the engine exceeds a predetermined value (ENDO_S), and if the level of damage of an engine, referred to as a "damaged" engine, exceeds a predetermined value, to modify at least one operating level of the damaged engine in such a manner that the rate of damage (dENDO/dt) of the damaged engine is less than a predetermined maximum rate of engine damage (dENDO/dt_max).

6. A control system for a multi-engine bay according to claim 5, wherein the operating limit updating unit (40) is configured to modify said at least one operating limit of the damaged engine by reducing a maximum thrust of the damaged engine.

7. A control system for a multi-engine bay according to claim 5 or claim 6, comprising an engine computer (34) for each engine, and wherein:
the operating limit updating unit (40) comprises, in each engine computer (34), an operating limit updating module (40) configured:
• to evaluate periodically whether the level of damage of the engine exceeds a predetermined value (ENDO_S);
• if the level of damage of the engine exceeds a predetermined value, to modify at least one operating limit of the damaged engine so that the rate of damage (dENDO/dt) of the damaged engine is less than a predetermined maximum rate of engine damage (dENDO/dt_max); and
• to inform the control unit (32) of the modification applied to said at least one operating limit of the damaged engine; and
the control unit (32) is configured to control the bay while taking account of said modification applied to said at least one operating limit for the damaged engine(s) .

8. A control system for a multi-engine bay according to claim 5 or claim 6, having a central computer (31) and, for each engine, an engine computer (34), and wherein:
the engine health evaluation unit (38) comprises, in each engine computer (34), an engine health evaluation module configured to evaluate periodically a level of damage (ENDO) for each of the engines;
the operating limit updating unit (40) comprises, in the central computer (31), an operating limit updating module (40) configured:
• to evaluate for each of the engines whether the level of damage of the engine exceeds a predetermined value (ENDO_S), on the basis of the respective levels of damage of the various engines as communicated by the engine health evaluation modules thereof;
• for each engine referred to as a "damaged" engine for which the level of damage exceeds a predetermined value, to modify at least one operating limit of the damaged engine in such a manner that the rate of damage (dENDO/dt) of the damaged engine is less than a predetermined maximum rate of engine damage (dENDO/dt_max); and
• to inform the control unit (32) of the modification applied to said at least one operating limit of the damaged engine(s); and
the control unit (32) is configured to control the bay (10) while taking account of said modification applied to said at least one operating limit for the damaged engine(s).

9. A multi-engine bay (10) including a control system according to any one of claims 5 to 8.
